# EUROPÄISCHE PATENTANMELDUNG

(11) **EP 3 798 433 A1**
(43) Veröffentlichungstag der Anmeldung: **31.03.2021**
(21) Anmeldenummer: 19199115.7
(22) Anmeldetag: 24.09.2019
(51) Int. Cl.: F01P 11/12, B27B 19/00, F02B 63/02

(54) **MOTORGETRIEBENES BEARBEITUNGSGERÄT UND LUFTFILTER**

(71) Anmelder: Andreas Stihl AG & Co. KG, 71336 Waiblingen (DE)
(72) Erfinder: Lechner, Sebastian, 71334 Waiblingen (DE); Maier, Alexander, 72218 Wildberg (DE)
(74) Vertreter: Patentanwälte Ruff, Wilhelm, Beier, Dauster & Partner mbB

(57) **Zusammenfassung**

1. Motorgetriebenes Bearbeitungsgerät und Luftfilter.
2.1. Die Erfindung bezieht sich auf ein motorgetriebenes Bearbeitungsgerät mit einem Gehäuse (15) mit einem Lufteintritt (16), einer Luftführung, die vom Lufteintritt (16) in das Gehäuse (15) führt, und einem den Lufteintritt (16) des Gehäuses (15) haubenförmig nach außen vorgewölbt abdeckenden Luftfilter (18), der einen Filterrahmenkörper mit einer dem Lufteintritt (16) des Gehäuses (15) zugewandten, filtergewebefreien Luftaustrittsfläche und einer sich über der filtergewebefreien Luftaustrittsfläche erhebenden, mindestens einen Fensterbereich aufweisenden Fensterrahmenstruktur, ein den mindestens einen Fensterbereich belegendes Filtergewebe und ein Befestigungsmittel zur lösbaren Befestigung des Filterrahmenkörpers am Gehäuse (15) umfasst, sowie auf einen Luftfilter hierfür.
2.2. Erfindungsgemäß weist die Fensterrahmenstruktur mindestens einen Fensterbereich begrenzende Rahmenstege auf, die gegenüber dem Filtergewebe in dem mindestens einen Fensterbereich zu einer Luftzufuhrseite hin vorspringen und Stegseitenkanten aufweisen, die gegenüber angrenzenden Fensterebenen unter einem stumpfen Winkel schräg verlaufen, und/oder das Befestigungsmittel umfasst eigenständig voneinander ein Vorfixier-Klemmhaltemittel und ein Endfixier-Haltemittel, und/oder die Fensterrahmenstruktur des Luftfilters (18) sich erhebt dachförmig mit einer dreieckigen Querschnittsform über der filtergewebefreien Luftaustrittsfläche.
2.3. Verwendung z.B. für handgeführte, motorgetriebene Garten- oder Forstbearbeitungsgeräte.

## Beschreibung

Die Erfindung bezieht sich auf ein motorgetriebenes Bearbeitungsgerät, das ein Gehäuse mit einem Lufteintritt, eine Luftführung, die vom Lufteintritt in das Gehäuse führt, und einen den Lufteintritt des Gehäuses haubenförmig nach außen vorgewölbt abdeckenden Luftfilter aufweist, der einen Filterrahmenkörper mit einer dem Lufteintritt des Gehäuses zugewandten, filtergewebefreien Luftaustrittsfläche und einer sich über der filtergewebefreien Luftaustrittsfläche erhebenden, mindestens einen Fensterbereich aufweisenden Fensterrahmenstruktur, ein den mindestens einen Fensterbereich belegendes Filtergewebe und ein Befestigungsmittel zur lösbaren Befestigung des Filterrahmenkörpers am Gehäuse umfasst, sowie auf einen Luftfilter hierfür.

Derartige Bearbeitungsgeräte sind beispielsweise als handgeführte, motorgetriebene Garten- oder Forstbearbeitungsgeräte in Gebrauch, wie Heckenschneider, Heckenscheren, Motorsensen, Hochentaster, Laubblasgeräte, Kehrgeräte, Motorsägen, Rasenmäher und Vertikutierer, wobei als Motorantrieb ein Verbrennungsmotor oder ein batteriegespeister Elektromotor dient. Die Luftführung dient z.B. dazu, einem Verbrennungsmotor Verbrennungsluft zuzuführen oder einem Elektromotor oder Verbrennungsmotor Kühlluft zuzuführen. Der Luftfilter verhindert ein unerwünschtes Eindringen von Schmutzpartikeln und dgl. in das Gerätegehäuse über den Lufteintritt mit der zugeführten, typischerweise mittels eines Gebläses angesaugten Luft.

Die Offenlegungsschrift DE 10 2005 031 501 A1 offenbart ein motorgetriebenes Bearbeitungsgerät der eingangs genannten Art, z.B. in Form einer Motorsäge, mit einem Verbrennungsmotor, der über den Lufteintritt am Gerätegehäuse Verbrennungsluft aus der Umgebung ansaugt. Vor dem Lufteintritt in das Gehäuse ist der Luftfilter angeordnet, wobei er lösbar mittels Schnapphaken am Gerätegehäuse gehalten. Beim dort verwendeten Luftfilter bildet die Fensterrahmenstruktur eine quaderförmige Mehrflächenstruktur mit entsprechend fünf gewinkelt entlang zugehöriger Rahmenseitenkanten aneinandergrenzenden Lufteintrittsflächen, die eine der Luftaustrittsfläche gegenüberliegende Fronteintrittsfläche und vier schmalseitige Eintrittsflächen jeweils angrenzend an die Fronteintrittsfläche und die Luftaustrittsfläche beinhalten.

Alternativ zu dem vorliegend betrachteten Typ von motorbetriebenen Bearbeitungsgeräten, bei denen der Luftfilter den Lufteintritt des Gerätegehäuses haubenförmig nach außen vorgewölbt abdeckt, ist bei einem anderen Typ von motorgetriebenen Bearbeitungsgeräten vorgesehen, dass der Luftfilter den Lufteintritt des Gerätegehäuses konform abdeckt, d.h. die Fensterrahmenstruktur mit dem einen oder mehreren, vom Filtergewebe belegten Fensterbereichen besitzt eine zum Lufteintritt des Gerätegehäuses gleichartige Form, zum Beispiel als ebene oder gewölbte Fläche. Bearbeitungsgeräte dieses Typs und zugehörige Luftfilter sind beispielsweise in der Gebrauchsmusterschrift CN 203019328 U, der Patentschrift JP 6252778 B2 und den Offenlegungsschriften EP 3 109 006 A1, DE 10 2012 012 606 A1 und DE 10 2014 106 693 A1 offenbart.

Die Offenlegungsschrift WO 2017/102125 A1 offenbart eine Handwerkzeugmaschine mit einem Filterträger, der aus zwei gelenkig miteinander verbundenen Halbschalen besteht, die um die Handwerkzeugmaschine herumgelegt und dann an ihren freien Enden z.B. mittels Klettverschlüssen lösbar miteinander verbunden werden können und am Maschinengehäuse auf gegenüberliegenden Seiten angeordnete Lufteintritte abdecken.

Die Patentschrift EP 2 240 302 B2 offenbart ein Elektrohandwerkzeuggerät, insbesondere in Form eines Winkelschleifers, bei dem auf gegenüberliegenden Gehäuseseiten angeordnete Lufteintritte von einem halbzylindrisch gestalteten Luftfilter abgedeckt werden, der unter gewisser elastischer Verformung auf das Gerätegehäuse aufgeschoben und in eine Hintergriffstellung am Gerätegehäuse eingerastet bzw. eingeklipst werden kann.

Der Erfindung liegt als technisches Problem die Bereitstellung eines motorgetriebenen Bearbeitungsgeräts der eingangs genannten Art und eines insbesondere für ein derartiges Bearbeitungsgerät verwendbaren Luftfilters mit hinsichtlich Fertigungs- und/oder Montageaufwand und/oder Filterfunktionalität und/oder Reinigungsfähigkeit gegenüber dem oben erläuterten Stand der Technik verbesserter Charakteristik zugrunde.

Die Erfindung löst dieses Problem durch die Bereitstellung eines motorgetriebenen Bearbeitungsgeräts mit den Merkmalen des Anspruchs 1 und eines Luftfilters mit den Merkmalen des Anspruchs 9. Vorteilhafte Weiterbildungen der Erfindung sind in den Unteransprüchen angegeben, deren Wortlaut hiermit durch Verweis zum Bestandteil der Beschreibung gemacht wird.

Gemäß einem Aspekt der Erfindung weist die Fensterrahmenstruktur des Luftfilters Rahmenstege auf, die den oder die Fensterbereiche begrenzen, gegenüber dem Filtergewebe in dem oder den Fensterbereichen zu einer Luftzufuhrseite hin vorspringen und Stegseitenkanten aufweisen, die gegenüber angrenzenden Fensterebenen unter einem stumpfen Winkel schräg verlaufen. Diese Gestaltung der Rahmenstege bietet deutliche Vorteile hinsichtlich einer problemlosen Reinigungsfähigkeit des Luftfilters und/oder hinsichtlich eines günstigen Luftströmungsverhaltens von durch den Luftfilter geleiteter Luft insbesondere im Bereich der Rahmenstege. Insbesondere erleichtert diese spezifische Gestaltung der Rahmenstege das Entfernen von Verschmutzungen an der Außenseite des Luftfilters und speziell in dem oder den Fensterbereichen, da die Rahmenstege gegenüber dem Filtergewebe mit stumpfwinklig verlaufenden Schrägkanten vorstehen, was das Abstreifen von Schmutz erleichtert, der sich auf dem Filtergewebe abgesetzt hat. Insbesondere wird durch den schrägen Kantenverlauf das Ausstreichen von Schmutz an den Übergängen des Filtergewebes zu den Rahmenstegen erleichtert.

Gemäß einem weiteren Aspekt der Erfindung umfasst das Befestigungsmittel des Luftfilters eigenständig voneinander ein Vorfixier-Klemmhaltemittel und Endfixier-Haltemittel. Diese Konfiguration des Befestigungsmittels hat den Vorteil, dass der Luftfilter mit seinem Filterrahmenkörper durch das Vorfixier-Klemmhaltemittel am Gerätegehäuse vorfixiert und anschließend durch das Endfixier-Haltemittel am Gerätegehäuse lösbar endfixiert werden kann. Durch die Vorfixierung am Gerätegehäuse braucht der Luftfilter während der Endfixierung am Gerätegehäuse nicht mehr vom Benutzer gehandhabt bzw. gehalten werden. Dies erleichtert die Endfixierung des Luftfilters am Gerätegehäuse.

Gemäß einem weiteren Aspekt der Erfindung erhebt sich die Fensterrahmenstruktur des Luftfilters dachförmig mit einer dreieckigen Querschnittsform über der filtergewebefreien Luftaustrittsfläche. Diese Konfiguration der Fensterrahmenstruktur hat für entsprechende Anwendungen sowohl gestalterische Vorteile als auch Vorteile in Bezug auf eine optimale Luftzufuhr zum Lufteintritt des Gerätegehäuses. Des Weiteren kann diese Konfiguration der Fensterrahmenstruktur bewirken, dass das Absetzen von Schmutzpartikeln und dergleichen auf dem Filtergewebe erschwert wird, da mit der angesaugten Luft mitgeführte Schmutzpartikel an der Dachform der Fensterrahmenstruktur leichter abgleiten können als z.B. auf einer zum Lufteintritt des Gehäuses parallelen und daher zur Hauptströmungsrichtung der angesaugten Luft senkrechten Filtergewebefläche.

In einer Weiterbildung der Erfindung bildet die Fensterrahmenstruktur des Luftfilters eine Mehrflächenstruktur mit mindestens vier gewinkelt entlang zugehöriger Rahmenseitenkanten aneinandergrenzenden Lufteintrittsflächen. Dies stellt eine vorteilhafte Realisierung der Fensterrahmenstruktur dar. In alternativen Ausführungen bildet die Fensterrahmenstruktur nur eine einteilige, filtergewebebelegte Fläche oder ein Mehrflächenstruktur mit nur zwei oder drei entlang zugehöriger Rahmenseitenkanten aneinandergrenzenden Lufteintrittsflächen.

In einer Ausgestaltung der Erfindung umfassen die mindestens vier Lufteintrittsflächen eine viereckförmige, spitzwinklig an die Luftaustrittsfläche angrenzende Fronteintrittsfläche, eine viereckförmige Bodeneintrittsfläche, die an die Fronteintrittsfläche und spitzwinklig an die Luftaustrittsfläche angrenzt, und zwei dreieckförmige Quereintrittsflächen, die jeweils an die Luftaustrittsfläche, an die Fronteintrittsfläche und an die Bodeneintrittsfläche angrenzen. Dies stellt eine weitergehend vorteilhafte Realisierung der Fensterrahmenstruktur des Luftfilters dar. In alternativen Ausführungen besitzt die Fronteintrittsfläche mehr als vier Eckbereiche und/oder Quereintrittsflächen mit mehr als drei Eckbereichen.

In einer Weiterbildung der Erfindung ist der Filterrahmenkörper des Luftfilters ein Spritzgussteil aus einem Kunststoffmaterial, und das Filtergewebe ist ein metallisches Filtergewebe, das randseitig vom Kunststoffmaterial des Filterrahmenkörpers umspritzt ist. Dies stellt eine insbesondere hinsichtlich Fertigungsaufwand und ausreichender Stabilität des Filterrahmenkörpers bzw. hoher Festigkeit der Anbindung des Filtergewebes an den Filterrahmenkörper vorteilhafte Realisierung dar. Alternativ ist der Filterrahmenkörper durch ein anderes herkömmliches Fertigungsverfahren gefertigt, optional auch aus einem Metallmaterial, und/oder das Filtergewebe besteht aus einem Kunststoffmaterial.

In einer Weiterbildung der Erfindung ist das Endfixier-Haltemittel des Luftfilters eine Schraubverbindung mit einer Befestigungsschraube und einer am Filterrahmenkörper ausgebildeten Schraubhülse, an deren Hülsenaußenumfang das Vorfixier-Klemmhaltemittel ausgebildet ist und/oder in der die Befestigungsschraube verliersicher aufgenommen ist. Durch die Schraubverbindung lässt sich der Luftfilter einfach und zuverlässig und mit ausreichender Festigkeit am Gerätegehäuse lösbar befestigen. Vorteilhaft erfüllt die Schraubhülse eine Doppelfunktion zum einen zum Aufnehmen der Befestigungsschraube und zum anderen zum Bereitstellen des Vorfixier-Klemmhaltemittels. Das verliersichere Aufnehmen der Befestigungsschraube durch die Schraubhülse hat den Vorteil, dass sich die Befestigungsschraube bereits an Ort und Stelle befindet, wenn der Luftfilter vom Benutzer zur Vorfixierung am Gerätegehäuse vorbereitet wird. In alternativen Ausführungen ist keine verliersichere Aufnahme der Befestigungsschraube vorgesehen und/oder das Endfixier-Haltemittel ist keine Schraubverbindung, sondern eine andere herkömmliche, lösbare Verbindung, z.B. eine lösbare Schnappverbindung.

In einer Weiterbildung der Erfindung beinhaltet das Bearbeitungsgerät ein Bearbeitungswerkzeug außerhalb des Gerätegehäuses und einen Verbindungsschaft zwischen dem Bearbeitungswerkzeug und dem Gerätegehäuse, wobei sich der Lufteintritt auf einer dem Bearbeitungswerkzeug zugewandten Hälfte des Gehäuses befindet. Dies stellt eine für entsprechende Anwendungen günstige Positionierung des Lufteintritts und damit auch des diesen abdeckenden Luftfilters dar. Alternativ kann sich der Lufteintritt mit dem abdeckenden Luftfilter an einer anderen Stelle des Gerätegehäuses befinden, z.B. auf einer dem Bearbeitungswerkzeug abgewandten Hälfte des Gerätegehäuses. In weiteren alternativen Ausführungen befindet sich das Bearbeitungswerkzeug innerhalb des Gerätegehäuses oder am Gerätegehäuse, und/oder das Bearbeitungswerkzeug befindet sich ohne dazwischen verlaufenden Verbindungsschaft außerhalb des Gerätegehäuses.

In einer Weiterbildung der Erfindung ist das Bearbeitungsgerät zum Betrieb in mindestens einer vorgegebenen Gebrauchslage eingerichtet, und der vom Luftfilter abgedeckte Lufteintritt befindet sich in einem in dieser Gebrauchslage nach unten weisenden Bereich des Gehäuses. Dies hat den Vorteil, dass ein selbsttätiges Abfallen von Schmutz, der vom Luftfilter abgefangen wird, vom Filtergewebe erleichtert wird, indem der Schmutz schwerkraftbedingt nach unten fallen kann. In entsprechenden Ausführungen kann das Bearbeitungsgerät mehrere vorgegebene Gebrauchslagen besitzen, z.B. eine horizontale und eine vertikale Gebrauchslage, wobei sich in diesem Fall gemäß dieser Weiterbildung der Erfindung der vom Luftfilter abgedeckte Lufteintritt zumindest in einer dieser vorgegebenen Gebrauchslagen in einem nach unten weisenden Bereich des Gerätegehäuses befindet. In alternativen Ausführungen befinden sich der Lufteintritt und der abdeckende Luftfilter in keiner vorgegebenen Gebrauchslage des Gerätes in einem nach unten weisenden Bereich des Gehäuses, sondern z.B. in einem seitlichen oder einem nach oben weisenden Bereich des Gerätegehäuses.

In einer Weiterbildung der Erfindung beinhaltet das Bearbeitungsgerät eine zu kühlende Gerätekomponente im Gerätegehäuse, ein Kühlluftgebläse und eine Kühlluftführung, die vom Lufteintritt des Gehäuses über die zu kühlende Gerätekomponente und das Kühlluftgebläse zu einem Luftaustritt aus dem Gerätegehäuse führt, wobei sich der Luftaustritt in einem seitlichen Bereich des Gerätegehäuses zwischen einer Gehäusevorderseite und einer Gehäuserückseite befindet, z.B. an einer Unterseite, einer Oberseite oder einer Seitenfläche des Gerätegehäuses. Dies stellt eine für entsprechende Anwendungen vorteilhafte Realisierung der Führung von Kühlluft für die zu kühlende Gerätekomponente im Gerätegehäuse dar, z.B. für einen dort untergebrachten Antriebsmotor. In alternativen Ausführungen ist die Kühlluftführung anders gestaltet, und/oder im Gerätegehäuse befindet sich ein Verbrennungsmotor, dem über den Lufteintritt Verbrennungsluft zugeführt wird, wozu dann eine entsprechende Verbrennungsluftführung vorgesehen ist.

In einer Ausgestaltung der Erfindung beinhaltet das Bearbeitungsgerät eine Gehäuseabdichtung, die das Gehäuse mindestens auf einer Saugseite des Kühlluftgebläses gegenüber Zuluft und/oder Schmutzeintrag bis auf den Lufteintritt abdichtet. Dies begünstigt eine gezielte Ansaugung von weitestgehend schmutzfreier Kühlluft möglichst ausschließlich über den hierfür vorgesehenen, vom Luftfilter abgedeckten Lufteintritt. Die Gehäuseabdichtung kann z.B. eine Gummidichtung und/oder eine Labyrinthdichtung beinhalten, die von entsprechenden, rippenförmigen Gehäusewandabschnitten gebildet ist. In alternativen Ausführungen dichtet die Gehäuseabdichtung vollständig luftdicht ab oder nicht vollständig luftdicht, aber so weitgehend, dass die Menge an Luft- und/oder Schmutzeintrag unter einem vorgebbaren Schwellwert liegt und auf diese Weise die Kühlfunktion durch die über den Lufteintritt angesaugte, gefilterte Luft nicht merklich stört.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
Fig. 1 eine perspektivische Seitenansicht eines motorgetriebenen Bearbeitungsgerätes,
Fig. 2 eine perspektivische Detailseitenansicht des Bearbeitungsgerätes in einem Bereich mit Luftfilter,
Fig. 3 eine perspektivische Detailseitenansicht des Bearbeitungsgerätes im Bereich eines Lufteintritts ohne den abdeckenden Luftfilter,
Fig. 4 eine Seitenansicht eines Gehäuseteils des Bearbeitungsgerätes bei abgenommener Gehäuseseitenwand und abgenommener Bediengriffhalbschale,
Fig. 5 eine perspektivische Draufsicht auf einen für das Bearbeitungsgerät verwendbaren Luftfilter auf eine Innenseite,
Fig. 6 eine perspektivische Ansicht des Luftfilters von Fig. 5 auf eine Außenseite und
Fig. 7 eine Schnittansicht längs einer Linie VII-VII von Fig. 6.

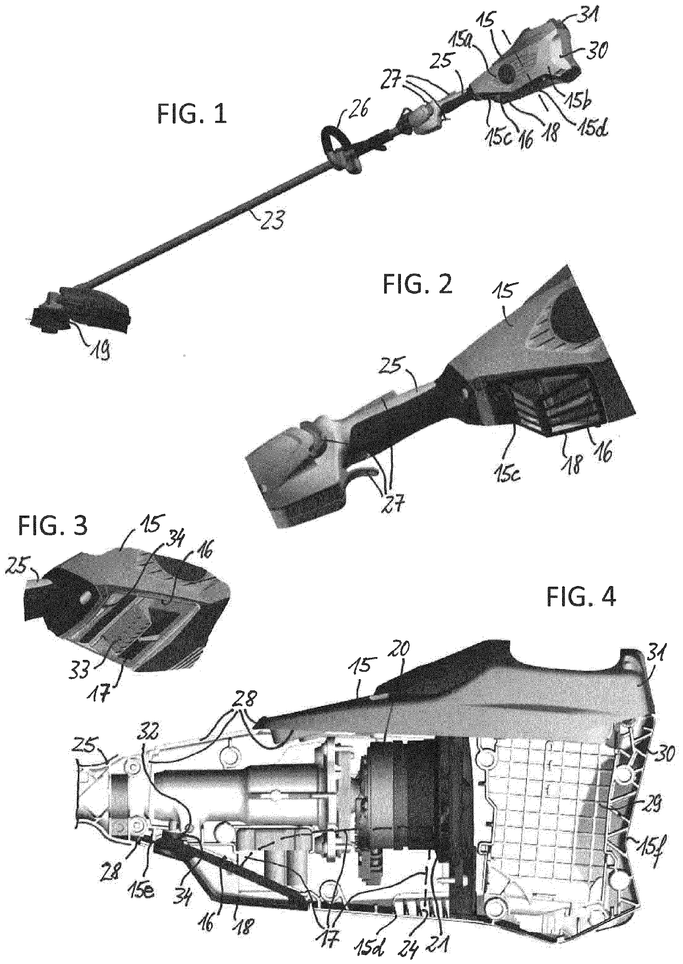

Das in den Fig. 1 bis 4 dargestellte, motorgetriebene Bearbeitungsgerät beinhaltet ein Gehäuse 15 mit einem Lufteintritt 16, eine Luftführung 17, die vom Lufteintritt 16 in das Gehäuse 15 führt, und einen den Lufteintritt 16 des Gehäuses 15 haubenförmig nach außen vorgewölbt abdeckenden Luftfilter 18. Bei dem Bearbeitungsgerät kann es sich insbesondere um ein handgeführtes Garten- oder Forstbearbeitungsgerät einer der oben genannten Arten handeln.

In entsprechenden Ausführungen beinhaltet das Bearbeitungsgerät wie im gezeigten Beispiel ein Bearbeitungswerkzeug 19 außerhalb des Gehäuses 15 und einen Verbindungsschaft 23 zwischen dem Bearbeitungswerkzeug 19 und dem Gehäuse 15, wobei sich der Lufteintritt 16 auf einer dem Bearbeitungswerkzeug 19 zugewandten Hälfte 15a des Gehäuses 15 befindet. Eine dem Bearbeitungswerkzeug 19 abgewandte Hälfte 15b des Gehäuses 15 bildet im gezeigten Beispiel einen rückseitigen Abschluss des Gehäuses 15 und des Bearbeitungsgerätes insgesamt. Alternativ zu einer derartigen Ausführung als sogenanntes Schaftgerät kann das Bearbeitungsgerät von einem schaftlosen Gerätetyp sein, z.B. vom Bohrmaschinen- und Winkelschleifertyp oder dergleichen.

In entsprechenden Ausführungen ist das Bearbeitungsgerät wie im gezeigten Beispiel zum Betrieb in mindestens einer vorgegebenen Gebrauchslage eingerichtet, und der vom Luftfilter 18 abgedeckte Lufteintritt 16 befindet sich in einem in dieser Gebrauchslage nach unten weisenden Bereich 15c des Gehäuses 15, wie sie für das Bearbeitungsgerät der Fig. 1 bis 4 in Fig. 1 gezeigt ist. In der in Fig. 1 gezeigten Gebrauchslage ist das Bearbeitungsgerät beispielsweise in einer Ausführung als Rasentrimmer einsetzbar, wozu das Bearbeitungswerkzeug 19 entsprechend in an sich bekannter und daher hier nicht näher zu erläuternder Weise eingerichtet ist.

Der Benutzer kann das Bearbeitungsgerät im gezeigten Beispiel an einem hinteren Griff 25 und einem vorderen Griff 26 halten und über eine Bedienelementanordnung 27 steuern, die sich z.B. am oder in der Nähe des hinteren Griffs 25 befindet. Optional kann das Bearbeitungsgerät je nach Ausführungstyp eine oder mehrere weitere Gebrauchslagen besitzen, in denen sich der Lufteintritt 16 ebenfalls in einem nach unten weisenden Bereich des Gehäuses 15, alternativ in einem nicht nach unten weisenden Bereich des Gehäuses 15 befindet. Die in der betreffenden Gebrauchslage nach unten weisende Orientierung des Lufteintritts 16 und damit auch des diesen abdeckenden Luftfilters 18 hat z.B. den Vorteil, dass sich angesaugter Schmutz, der sich außen am Luftfilter 18 anlagert, durch Schwerkraft von selbst wieder vom Luftfilter 18 lösen und nach unten abfallen kann oder durch den Benutzer leicht vom Luftfilter 18 abgestreift werden kann. Der Griff beinhaltet im gezeigten Beispiel zwei Griffhalbschalen, von denen in Fig. 4 die sichtseitige Griffhalbschale abgenommen ist.

In entsprechenden Ausführungen weist das Bearbeitungsgerät wie im gezeigten Beispiel eine zu kühlende Gerätekomponente 20 im Gehäuse 15 und ein Kühlluftgebläse 21 auf, wobei die Luftführung 17 eine Kühlluftführung bildet, die vom Lufteintritt 16 des Gehäuses 15 über die zu kühlende Gerätekomponente 20 und das Kühlluftgebläse 21 zu einem Luftaustritt 24 des Gehäuses 15 führt, der sich in einem Bereich 15d des Gehäuses 15 zwischen einer Gehäusevorderseite 15e und einer Gehäuserückseite 15f befindet. Der Verlauf, der in diesem Fall als Kühlluftführung fungierenden Luftführung 17 ist in Fig. 4 schematisch gestrichelt wiedergegeben, wobei zur besseren Erkennbarkeit der Luftführung 17 eine sichtseitige Gehäuseseitenwand und ein Gebläsegehäuse abgenommen, d.h. nicht gezeigt, sind. Der Bereich 15d des Luftaustritts 24 kann sich wie gezeigt an einer Unterseite des Gehäuses 15 befinden, alternativ an der Oberseite oder an einem Seitenbereich des Gehäuses 15.

Bei der zu kühlenden Gerätekomponente 20 kann es sich beispielsweise um einen zu kühlenden Antriebsmotor für das Bearbeitungswerkzeug 19 handeln. In diesem Fall verläuft in an sich bekannter Weise eine Antriebswelle durch den Verbindungsschaft 23 hindurch vom Antriebsmotor im dann als Motorgehäuse fungierenden Gehäuse 15 zum frontseitigen Bearbeitungswerkzeug 19. Je nach Bedarf befinden sich eine oder mehrere weitere zu kühlende Gerätekomponenten in der Luftführung 17, z.B. eine elektrische Steuereinheit, sei es direkt oder über eine zugehörige Kühlkörperstruktur 33, wie aus Fig. 3 ersichtlich.

In entsprechenden Ausführungen handelt es sich wie gezeigten Beispiel um ein akkugespeistes Bearbeitungsgerät, wozu dann im Gehäuse 15 ein Akkuaufnahmeraum 29 zum Einsetzen einer Akkumulatoreinheit bzw. eines Akkupacks vorgesehen ist.

In entsprechenden Ausführungen weist das Bearbeitungsgerät wie im gezeigten Beispiel eine Gehäuseabdichtung 28 auf, die das Gehäuse 15 mindestens auf einer Saugseite des Kühlgebläses 21 bis auf den Lufteintritt 16 weitgehend luftdicht abdichtet. Im gezeigten Ausführungsbeispiel ist die Saugseite des Kühlluftgebläses 21 vom in Fig. 4 links des Kühlluftgebläses 21 befindlichen Teil des Gehäuses 15 gebildet, während sich in Fig. 4 rechts des Kühlluftgebläses 21 die Druckseite befindet. Im gezeigten Beispiel liegt die zu kühlende Gerätekomponente 20 bzw. der Antriebsmotor auf der Saugseite, während der Akkuaufnahmeraum 29 auf der Druckseite liegt. Die Gehäuseabdichtung 28 ist in einer an sich bekannten und daher hier nicht näher zu erläuternden Weise realisiert, z.B. über entsprechende Labyrinthdichtungen und/oder Gummidichtprofile entlang von Trennkanten aneinandergrenzender Bestandteile des Gehäuses 15, wie einem Gehäuseschalenkörper 30 und einer Gehäuseabdeckung 31, sowie entlang einer Trennkante zwischen Gehäuse 15 und Luftfilter 18.

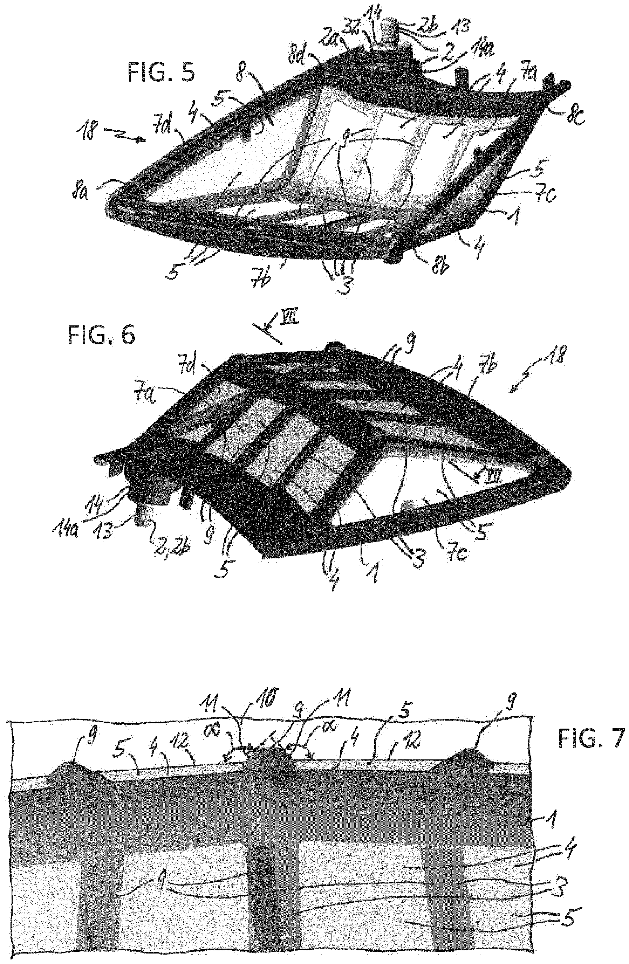

Der Luftfilter 18 umfasst, wie in Verbindung mit den Fig. 5 bis 7 deutlicher wird, einen Filterrahmenkörper 1 mit einer filtergewebefreien Luftaustrittsfläche 8 und einer sich über der Luftaustrittsfläche 8 erhebenden, mindestens einen Fensterbereich 4 aufweisenden Fensterrahmenstruktur 3 sowie ein den mindestens einen Fensterbereich 4 belegendes Filtergewebe 5 und ein Befestigungsmittel 2 zur lösbaren Befestigung des Filterrahmenkörpers 1. Die Luftaustrittsfläche 8 ist im Ausführungsbeispiel der Fig. 5 bis 7 durch die in der Ansicht von Fig. 5 oben liegende, viereckförmige Fläche mit vier zugehörigen Eckbereichen 8a, 8b, 8c, 8d gegeben. In Verwendung für das Bearbeitungsgerät der Fig. 1 bis 4 ist die Luftaustrittsfläche 8 zu dem Lufteintritt 16 des Gehäuses 15 konform und diesem zugewandt, und das Befestigungsmittel 2 dient zur lösbaren Befestigung des Filterrahmenkörpers 1 am Gehäuse 15. Es versteht sich, dass der Luftfilter 18 auch für anderweitige Einsatzzwecke überall dort nutzbringend verwendbar ist, wo Bedarf an einer Abdeckung eines Lufteintritts durch ein schmutzabweisendes Filtergewebe, wie das Filtergewebe 5, besteht.

In entsprechenden Ausführungen des Luftfilters 18 weist die Fensterrahmenstruktur 3 wie im gezeigten Beispiel der Fig. 5 bis 7 Rahmenstege 9 auf, die den mindestens einen Fensterbereich 4 begrenzen, gegenüber dem Filtergewebe 5 in dem mindestens einen Fensterbereich 4 zu einer Luftfuhrseite 10 hin vorspringen und Stegseitenkanten 11 aufweisen, die gegenüber angrenzenden Fensterebenen 12 unter einem stumpfen Winkel *α* schräg verlaufen, wie insbesondere aus der Schnittansicht von Fig. 7 ersichtlich. Der stumpfe Winkel *α* liegt im Bereich zwischen 90° und 180° insbesondere im Bereich zwischen 100° und 160°, bevorzugt zwischen 120° und 150°. Die Fensterebenen 12 sind durch eine Ebene des betreffenden Fensterbereichs 4 definiert.

Diese Gestaltung der Rahmenstege 9, die mit den schrägen Seitenkanten 11 gegenüber dem Filtergewebe 5 zur Luftzufuhrseite 10 hin vorspringen, erleichtert die Reinigung des Luftfilters 18 von an seiner Außenseite angelagertem Schmutz und kann sich zudem günstig auf das Strömungsverhalten von Luft auswirken, die von außen durch den jeweiligen Fensterbereich 4 bzw. das dortige Filtergewebe 5 hindurchströmt und dabei auch an den Rahmenstegen 9 entlangstreicht.

In entsprechenden Ausführungen umfasst das Befestigungsmittel 2 wie im gezeigten Ausführungsbeispiel eigenständig voneinander ein Vorfixier-Klemmhaltemittel 2a und ein Endfixier-Haltemittel 2b. Durch das Vorfixier-Klemmhaltemittel 2a kann der Luftfilter 18 mit seinem Filterrahmenkörper 1 an seinem gedachten Einsatzort, z.B. an einem Gerätegehäuse wie dem Gehäuse 15 des Bearbeitungsgerätes der Fig. 1 bis 4, vorfixiert werden, und anschließend kann er durch das Endfixier-Haltemittel 2b lösbar endfixiert werden, z.B. am Gehäuse 15 des Bearbeitungsgerätes der Fig. 1 bis 4 oder an einem anderen Gerätegehäuse oder einem anderen Fixierort.

In entsprechenden Ausführungen ist wie im gezeigten Beispiel das Endfixier-Haltemittel 2b eine Schraubverbindung mit einer Befestigungsschraube 13 und einer am Filterrahmenkörper 1 ausgebildeten Schraubhülse 14. In einer vorteilhaften Realisierung ist wie beim gezeigten Beispiel das Vorfixier-Klemmhaltemittel 2a am Hülsenaußenumfang 14a der Schraubhülse 14 ausgebildet, z.B. in Form einer Klemmkantenabflachung 32 des ansonsten zylindrischen Hülsenaußenumfangs 14a, wobei in diesem Fall die Klemmkantenabflachung 32 mit einem korrespondierenden Gegenklemmmittel 34 zusammenwirken kann. Bei Verwendung des Luftfilters 18 am Bearbeitungsgerät der Fig. 1 bis 4 kann das Gegenklemmmittel 34 z.B. von einem zugewandten Wandungsabschnitt im Bereich des Lufteintritts 16 des Gehäuses 15 gebildet sein, wie in den Fig. 3 und 4 gezeigt. Der Luftfilter 18 kann dann durch diese Klemmfixierung am Gehäuse 15 vorfixiert werden, und anschließend kann die Endfixierung durch Verbinden der Befestigungsschraube 13 mit einem zugehörigen Gegenverbindungselement am Gehäuse 15 endfixiert werden. Durch die klemmende Vorfixierung braucht der Luftfilter 18 während der Endfixierung vom Benutzer nicht in Position gehalten werden.

In entsprechenden Realisierungen ist wie im gezeigten Beispiel die Befestigungsschraube 13 verliersicher in der Schraubhülse 14 aufgenommen. Die Befestigungsschraube 13 kann dadurch am Luftfilter 18 bereits vor dessen Endfixierung vormontiert werden und befindet sich dann für die Endfixierung des Luftfilters 18 bereits am gewünschten Einsatzort.

In vorteilhaften Ausführungen bildet die Fensterrahmenstruktur 3 wie im gezeigten Ausführungsbeispiel eine Mehrflächenstruktur mit mindestens vier gewinkelt entlang zugehöriger Rahmenseitenkanten 6 aneinandergrenzenden Lufteintrittsflächen 7a, 7b, 7c, 7d. Vorteilhaft können hierbei wie im gezeigten Beispiel die mindestens vier Lufteintrittsflächen 7a, 7b, 7c, 7d eine viereckförmige, spitzwinklig an die Luftaustrittsfläche 8 angrenzende Fronteintrittsfläche 7a, eine viereckförmige an die Fronteintrittsfläche 7a und spitzwinklig an die Luftaustrittsfläche 8 angrenzende Bodeneintrittsfläche 7b und zwar jeweils an die Luftaustrittsfläche 8, die Fronteintrittsfläche 7a und die Bodeneintrittsfläche 7b angrenzende, dreieckförmige Quereintrittsflächen 7c, 7d umfassen. Dies stellt eine für entsprechende Anwendungsfälle sowohl hinsichtlich großer Lufteintrittsfläche bzw. Filtergewebefläche und Luftzuströmung günstige, dachförmige Gestaltung für den sich haubenförmig in Richtung Luftzufuhrseite 10 hin vorwölbenden Luftfilter 18 dar. Im gezeigten Beispiel beinhalten die die Fronteintrittsfläche 7a und die Bodeneintrittsfläche 7b jeweils vier Fensterbereiche 4, und die beiden dreieckförmigen Quereintrittsflächen 7c, 7d jeweils einen Fensterbereich 4.

In entsprechenden Ausführungen erhebt sich die Fensterrahmenstruktur 3 des Luftfilters 18 wie im gezeigten Beispiel dachförmig mit einer dreieckigen Querschnittsform über der filtergewebefreien Luftaustrittsfläche 8. Dies stellt für entsprechende Anwendungen eine hinsichtlich Bereitstellung einer großen Lufteintrittsfläche bzw. Filtergewebefläche bei gegebener Ausdehnung der Luftaustrittsfläche 8 bzw. des Gehäuselufteintritts 16 und/oder hinsichtlich Luftzuströmung günstige Gestaltung des Luftfilters 18 dar.

In vorteilhaften Ausführungen ist der Filterrahmenkörper 1 ein Spritzgußteil aus einem Kunststoffmaterial, und das Filtergewebe 5 ist ein metallisches Filtergewebe, das randseitig vom Kunststoffmaterial des Filterrahmenkörpers 1 umspritzt ist. Dadurch ist das Filtergewebe 5 mit relativ geringem Fertigungsaufwand stabil mit der Fensterrahmenstruktur 3 verbunden. Das Filtergewebe 5 kann beispielsweise aus Edelstahl bestehen und/oder eine Filtermaschenweite im Bereich von ca. 0,4mm bis 0,6mm und/oder eine Maschendrahtstärke zwischen etwa 0,30mm und 0,33mm aufweisen.

Wie die gezeigten und die weiteren oben erwähnten Ausführungsbeispiele deutlich machen, stellt die Erfindung ein vorteilhaftes motorgetriebenes Bearbeitungsgerät mit einem speziell gestalteten und/oder angebrachten Luftfilter sowie einen für ein solches Bearbeitungsgerät und ähnliche, andere Anwendungen geeigneten Luftfilter zur Verfügung, der eine zur Lufteintrittsseite hin haubenförmig vorgewölbte, insbesondere dachförmige Gestaltung besitzt. Der Luftfilter ist besonders vorteilhaft für handgeführte, motorgetriebene Garten- und Forstbearbeitungsgeräte verwendbar, wie Heckenschneider, Heckenscheren, Motorsensen, Hochentaster und andere, derartige, oben genannte Geräte.

## Patentansprüche

1. Motorgetriebenes Bearbeitungsgerät, insbesondere handgeführtes, motorgetriebenes Garten- oder Forstbearbeitungsgerät, mit
- einem Gehäuse (15) mit einem Lufteintritt (16),
- einer Luftführung (17), die vom Lufteintritt (16) in das Gehäuse (15) führt, und
- einem den Lufteintritt (16) des Gehäuses (15) haubenförmig nach außen vorgewölbt abdeckenden Luftfilter (18), der einen Filterrahmenkörper (1) mit einer dem Lufteintritt (16) des Gehäuses (15) zugewandten, filtergewebefreien Luftaustrittsfläche (8) und einer sich über der filtergewebefreien Luftaustrittsfläche (8) erhebenden, mindestens einen Fensterbereich (4) aufweisenden Fensterrahmenstruktur (3), ein den mindestens einen Fensterbereich (4) belegendes Filtergewebe (5) und ein Befestigungsmittel (2) zur lösbaren Befestigung des Filterrahmenkörpers (1) am Gehäuse (15) umfasst,
**dadurch gekennzeichnet, dass**
- die Fensterrahmenstruktur (3) den mindestens einen Fensterbereich (4) begrenzende Rahmenstege (9) aufweist, die gegenüber dem Filtergewebe (5) in dem mindestens einen Fensterbereich (4) zu einer Luftzufuhrseite (10) hin vorspringen und Stegseitenkanten (11) aufweisen, die gegenüber angrenzenden Fensterebenen (12) unter einem stumpfen Winkel schräg verlaufen, und/oder
- das Befestigungsmittel (2) eigenständig voneinander ein Vorfixier-Klemmhaltemittel (2a) und ein Endfixier-Haltemittel (2b) umfasst und/oder
- sich die Fensterrahmenstruktur (3) des Luftfilters (18) dachförmig mit einer dreieckigen Querschnittsform über der filtergewebefreien Luftaustrittsfläche (8) erhebt.

2. Motorgetriebenes Bearbeitungsgerät nach Anspruch 1, weiter **gekennzeichnet durch** ein Bearbeitungswerkzeug (19) außerhalb des Gehäuses (15) und einen Verbindungsschaft (23) zwischen dem Bearbeitungswerkzeug (19) und dem Gehäuse (15), wobei sich der Lufteintritt (16) auf einer dem Bearbeitungswerkzeug (19) zugewandten Hälfte (15a) des Gehäuses (15) befindet.

3. Motorgetriebenes Bearbeitungsgerät nach Anspruch 1 oder 2, weiter **dadurch gekennzeichnet, dass** es zum Betrieb in mindestens einer vorgegebenen Gebrauchslage eingerichtet ist und sich der vom Luftfilter (18) abgedeckte Lufteintritt (16) in einem in dieser Gebrauchslage nach unten weisenden Bereich (15c) des Gehäuses (15) befindet.

4. Motorgetriebenes Bearbeitungsgerät nach einem der Ansprüche 1 bis 3, weiter **gekennzeichnet durch** eine zu kühlende Gerätekomponente (20) im Gehäuse (15) und ein Kühlluftgebläse (21), wobei die Luftführung eine Kühlluftführung bildet, die vom Lufteintritt (16) des Gehäuses (15) über die zu kühlende Gerätekomponente (20) und das Kühlluftgebläse (21) zu einem Luftaustritt (24) des Gehäuses (15) führt, der sich in einem Bereich (15d) des Gehäuses (15) zwischen einer Gehäusevorderseite (15e) und einer Gehäuserückseite (15f) befindet.

5. Motorgetriebenes Bearbeitungsgerät nach Anspruch 4, weiter **gekennzeichnet durch** eine Gehäuseabdichtung (28), die das Gehäuse (15) mindestens auf einer Saugseite des Kühlluftgebläses (21) gegenüber Zuluft und/oder Schmutzeintrag bis auf den Lufteintritt (16) abdichtet.

6. Motorgetriebenes Bearbeitungsgerät nach einem der Ansprüche 1 bis 5, weiter **dadurch gekennzeichnet, dass** die Fensterrahmenstruktur (3) eine Mehrflächenstruktur mit mindestens vier gewinkelt entlang zugehöriger Rahmenseitenkanten (6) aneinandergrenzenden Lufteintrittsflächen (7a, 7b, 7c, 7d) bildet.

7. Motorgetriebenes Bearbeitungsgerät nach Anspruch 6, weiter **dadurch gekennzeichnet, dass** die mindestens vier Lufteintrittsflächen (7a, 7b, 7c, 7d) eine viereckförmige, spitzwinklig an die Luftaustrittsfläche (8) angrenzende Fronteintrittsfläche (7a), eine viereckförmige, an die Fronteintrittsfläche (7a) und spitzwinklig an die Luftaustrittsfläche (8) angrenzende Bodeneintrittsfläche (7b) und zwei jeweils an die Luftaustrittsfläche (8), an die Fronteintrittsfläche (7a) und an die Bodeneintrittsfläche (7b) angrenzende, dreieckförmige Quereintrittsflächen (7c, 7d) umfassen.

8. Motorgetriebenes Bearbeitungsgerät nach einem der Ansprüche 1 bis 7, weiter **dadurch gekennzeichnet, dass** der Filterrahmenkörper (1) ein Spritzgussteil aus einem Kunststoffmaterial ist und das Filtergewebe (5) ein metallisches Filtergewebe ist, das randseitig vom Kunststoffmaterial des Filterrahmenkörpers (1) umspritzt ist.

9. Motorgetriebenes Bearbeitungsgerät nach einem der Ansprüche 1 bis 8, weiter **dadurch gekennzeichnet, dass** das Endfixier-Haltemittel (2b) eine Schraubverbindung mit einer Befestigungsschraube (13) und einer am Filterrahmenkörper (1) ausgebildeten Schraubhülse (14) ist, an deren Hülsenaußenumfang (14a) das Vorfixier-Klemmhaltemittel (2a) ausgebildet ist und/oder in der die Befestigungsschraube (13) verliersicher aufgenommen ist.

10. Luftfilter, insbesondere für ein motorgetriebenes Bearbeitungsgerät, mit
- einem Filterrahmenkörper (1) mit einer filtergewebefreien Luftaustrittsfläche (8) und einer sich über der Luftaustrittsfläche (8) erhebenden, mindestens einen Fensterbereich (4) aufweisenden Fensterrahmenstruktur (3),
- einem den mindestens einen Fensterbereich (4) belegenden Filtergewebe (5) und
- einem Befestigungsmittel (2) zur lösbaren Befestigung des Filterrahmenkörpers (1),
**dadurch gekennzeichnet, dass**
- die Fensterrahmenstruktur (3) den mindestens einen Fensterbereich (4) begrenzende Rahmenstege (9) aufweist, die gegenüber dem Filtergewebe (5) in dem mindestens einen Fensterbereich (4) zu einer Luftzufuhrseite (10) hin vorspringen und Stegseitenkanten (11) aufweisen, die gegenüber angrenzenden Fensterebenen (12) unter einem stumpfen Winkel schräg verlaufen, und/oder
- das Befestigungsmittel (2) eigenständig voneinander ein Vorfixier-Klemmhaltemittel (2a) und ein Endfixier-Haltemittel (2b) umfasst und/oder
- sich die Fensterrahmenstruktur (3) des Luftfilters (18) dachförmig mit einer dreieckigen Querschnittsform über der filtergewebefreien Luftaustrittsfläche (8) erhebt.

11. Luftfilter nach Anspruch 10, weiter **dadurch gekennzeichnet, dass** die Fensterrahmenstruktur (3) eine Mehrflächenstruktur mit mindestens vier gewinkelt entlang zugehöriger Rahmenseitenkanten (6) aneinandergrenzenden Lufteintrittsflächen (7a, 7b, 7c, 7d) bildet.

12. Luftfilter nach Anspruch 11, weiter **dadurch gekennzeichnet, dass** die mindestens vier Lufteintrittsflächen (7a, 7b, 7c, 7d) eine viereckförmige, spitzwinklig an die Luftaustrittsfläche (8) angrenzende Fronteintrittsfläche (7a), eine viereckförmige, an die Fronteintrittsfläche (7a) und spitzwinklig an die Luftaustrittsfläche (8) angrenzende Bodeneintrittsfläche (7b) und zwei jeweils an die Luftaustrittsfläche (8), an die Fronteintrittsfläche (7a) und an die Bodeneintrittsfläche (7b) angrenzende, dreieckförmige Quereintrittsflächen (7c, 7d) umfassen.

13. Luftfilter nach einem der Ansprüche 10 bis 12, weiter **dadurch gekennzeichnet, dass** der Filterrahmenkörper (1) ein Spritzgussteil aus einem Kunststoffmaterial ist und das Filtergewebe (5) ein metallisches Filtergewebe ist, das randseitig vom Kunststoffmaterial des Filterrahmenkörpers (1) umspritzt ist.

14. Luftfilter nach einem der Ansprüche 10 bis 13, weiter **dadurch gekennzeichnet, dass** das Endfixier-Haltemittel (2b) eine Schraubverbindung mit einer Befestigungsschraube (13) und einer am Filterrahmenkörper (1) ausgebildeten Schraubhülse (14) ist, an deren Hülsenaußenumfang (14a) das Vorfixier-Klemmhaltemittel (2a) ausgebildet ist und/oder in der die Befestigungsschraube (13) verliersicher aufgenommen ist.
